# EUROPEAN PATENT APPLICATION

(11) **EP 4 752 799 A1**
(43) Date of publication of application: **03.06.2026**
(21) Application number: 25216869.5
(22) Date of filing: 19.11.2025
(51) Int. Cl.: G06Q 10/0631, G06Q 10/0639

(54) **METHOD, INFORMATION PROCESSING APPARATUS, AND NON-TRANSITORY COMPUTER READABLE MEDIUM**

(30) Priority: 28.11.2024 JP 2024207799
(71) Applicant: Toyota Jidosha Kabushiki Kaisha, Toyota-shi, Aichi-ken 471-8571 (JP)
(72) Inventor: OKUYAMA, Manabu, Toyota-shi, 471-8571 (JP); OKAMOTO, Masayuki, Toyota-shi, 471-8571 (JP); YAMAMURO, Naoki, Toyota-shi, 471-8571 (JP); TAKEUCHI, Yasuomi, Toyota-shi, 471-8571 (JP)
(74) Representative: TBK

(57) **Abstract**

A method performed by an information processing apparatus includes identifying, based on personnel information on a plurality of employees, each employee who has a first event scheduled, which is an event that changes an area of work responsibility, determining, for each employee identified, a schedule of each employee to perform a second event, which is an event that collects know-how information from the employee, prior to a scheduled date of the first event, and storing, linked to each employee, the know-how information collected through the second event, in a database.

## Description

### TECHNICAL FIELD

The present disclosure relates to a method, an information processing apparatus, and a program.

### BACKGROUND

Technology for generating, based on documents in a given domain, a dialogue bot specialized for that domain using a large language model is known. For example, Patent Literature (PTL) 1 discloses using documents and queries belonging to a specific domain for machine learning of a search model for a dialogue bot.

### CITATION LIST

### Patent Literature

PTL 1: JP 2023-076413 A

### SUMMARY

In a dialogue system using machine learning, know-how information that can be an answer to an input question may be acquired from a database and displayed. To realize such a dialogue system, it is required to collect know-how information with high efficiency. Therefore, there is room for improvement in technology for realizing dialogue systems.

It would be helpful to improve technology for realizing dialogue systems.

A method according to an embodiment of the present disclosure is a method performed by an information processing apparatus, the method including:
identifying, based on personnel information on a plurality of employees, each employee who has a first event scheduled, the first event being an event that changes an area of work responsibility;
for each employee identified, determining a schedule of each employee to perform a second event prior to a scheduled date of the first event, the second event being an event that collects know-how information from the employee; and
storing, linked to each employee, the know-how information collected through the second event, in a database.

An information processing apparatus according to the present disclosure is an information processing apparatus including a controller configured to:
identify, based on personnel information on a plurality of employees, each employee who has a first event scheduled, the first event being an event that changes an area of work responsibility;
for each employee identified, determine a schedule of each employee to perform a second event prior to a scheduled date of the first event, the second event being an event that collects know-how information from the employee; and
store, linked to each employee, the know-how information collected through the second event, in a database.

A program according to an embodiment of the present disclosure is configured to cause a computer to execute operations, the operations including:
identifying, based on personnel information on a plurality of employees, each employee who has a first event scheduled, the first event being an event that changes an area of work responsibility;
for each employee identified, determining a schedule of each employee to perform a second event prior to a scheduled date of the first event, the second event being an event that collects know-how information from the employee; and
storing, linked to each employee, the know-how information collected through the second event, in a database.

According to an embodiment of the present disclosure, technology for realizing dialogue systems is improved.

### BRIEF DESCRIPTION OF THE DRAWINGS

In the accompanying drawings:
FIG. 1 is a configuration diagram illustrating an example configuration of an information processing system that includes an information processing apparatus according to an embodiment of the present disclosure;
FIG. 2 is a block diagram illustrating an example configuration of the information processing apparatus of FIG. 1;
FIG. 3 is a block diagram illustrating an example configuration of a terminal apparatus of FIG. 1;
FIG. 4 is a sequence diagram illustrating an example of an information processing method performed by the information processing system of FIG. 1;
FIG. 5 is a flowchart illustrating an example of an information processing method performed by the information processing apparatus of FIG. 1; and
FIG. 6 is a schematic diagram for explaining an example of operations of the information processing apparatus of FIG. 1.

### DETAILED DESCRIPTION

Hereinafter, an embodiment of the present disclosure will be described with reference to the accompanying drawings. The following description regarding an information processing apparatus 10 also applies to an information processing system 1 including the information processing apparatus 10, a method performed by the information processing apparatus 10, and a program that causes the information processing apparatus 10 as a computer to execute operations, to which the present disclosure is applied.

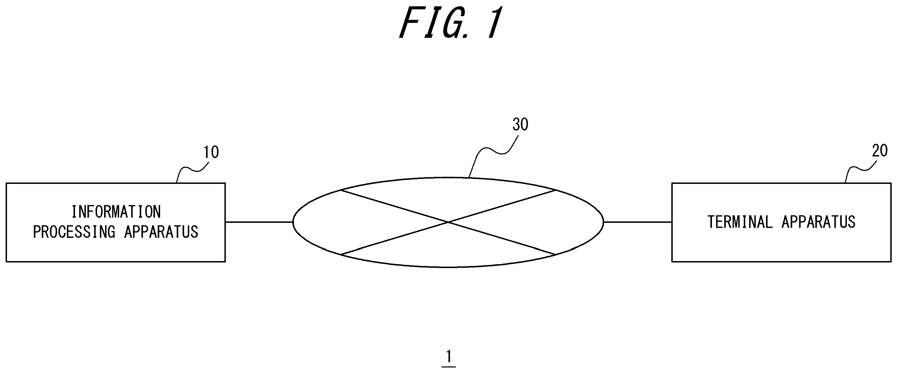

FIG. 1 is a configuration diagram illustrating an example configuration of the information processing system 1 including the information processing apparatus 10 according to the embodiment of the present disclosure. With reference to FIG. 1, an outline of the information processing system 1 including the information processing apparatus 10 according to the embodiment of the present disclosure will be primarily described. The information processing system 1 includes a terminal apparatus 20, in addition to the information processing apparatus 10.

For the sake of simplicity in explanation, only one information processing apparatus 10 is illustrated in FIG. 1, but the number of information processing apparatuses 10 included in the information processing system 1 may be two or more. Similarly, only one terminal apparatus 20 is illustrated in FIG. 1, but the number of terminal apparatuses 20 included in the information processing system 1 may be two or more. Each of the information processing apparatus 10 and the terminal apparatus 20 is communicably connected to a network 30 including a mobile communication network, the Internet, or the like. One of the information processing apparatus 10 or the terminal apparatus 20 is communicably connected to another apparatus via the network 30.

The information processing apparatus 10 includes, for example, a single server apparatus or a plurality of server apparatuses that can communicate with each other. Not limited to these, the information processing apparatus 10 may include any general purpose electronic device such as a personal computer (PC), a tablet PC, a smartphone, or a wearable device like a smartwatch, or may include another electronic device dedicated to the information processing system 1. The information processing apparatus 10 is used in cooperation with the terminal apparatus 20 to realize a dialogue system that retrieves, from a database, and displays know-how information that can be an answer to an input question.

In the present disclosure, the "know-how information" includes information that is not contained in a manual, and information uniquely acquired by employees while the employees perform duty. The know-how information may include, for example, information indicating know-how in a specific field. The know-how refers to specific or specialized knowledge, techniques, skills, methods, or information, and is typically transmitted through explanations in words, images, or actions. The subject of the know-how may include tasks such as screwing or assembly, application, software operation, or procedures for performing duty, but is not limited to these. The "specific field" can be determined freely according to the usage of the information processing system 1. For example, when the information processing system 1 is used by a vehicle manufacturer, the "specific field" may include areas such as vehicle manufacturing, maintenance, or sales.

The terminal apparatus 20 includes any general purpose electronic device such as a PC, a tablet PC, a smartphone, or a wearable device like a smartwatch. The terminal apparatus 20 includes, for example, an electronic device used by a first user who collects the know-how information to realize the dialogue system described above. Not limited to these, the terminal apparatus 20 may include one server apparatus or a plurality of server apparatuses, which can communicate with each other, used by the first user, or may also include another electronic device dedicated to the information processing system 1.

As an overview of the embodiment, the information processing apparatus 10 identifies, based on personnel information on a plurality of employees, each employee who has a first event scheduled. The first event is an event that changes an area of work responsibility. The information processing apparatus 10 determines, for each employee identified, a schedule of each employee to perform a second event, prior to a scheduled date of the first event. The second event is an event that collects know-how information from the employee. The information processing apparatus 10 stores, linked to each employee, the know-how information collected through the second event, in a database.

In the present disclosure, the "personnel information" includes information such as a position, department, duration of department affiliation, job type, project in charge, duration of project in charge, work history, expected project completion date, expected transfer date, or expected retirement date. The "area of work responsibility" includes a work area determined according to, for example, a responsible component, responsible unit, responsible product, responsible design, affiliated department, or the like. The "first event" includes, for example, retirement, transfer, completion of a project in charge, or the like. The "second event" includes, for example, an interview or the like for collecting the know-how information.

The information processing apparatus 10 may be, for example, a server apparatus installed in a data center or the like. For example, the information processing apparatus 10 may be a server belonging to a cloud computing system or another type of computing system. The information processing apparatus 10 may include, for example, a language model. In the present disclosure, the "language model" includes any dialogue system such as a large language model (LLM) or a chatbot. The language model outputs text in response to a prompt, based on input of the prompt, which is an instruction from a second user. For example, the terminal apparatus 20 or another terminal apparatus different from the terminal apparatus 20 inputs a prompt into the language model of the information processing apparatus 10, and acquires an output result in response to the prompt. The second user may be the same user as the first user or a different user.

More specifically, the terminal apparatus 20 or another terminal apparatus different from the terminal apparatus 20 transmits a question acquired from the second user to the information processing apparatus 10 via the network 30. The information processing apparatus 10 interprets the content of the question, which is received from the terminal apparatus 20 or the other terminal apparatus different from the terminal apparatus 20, by natural language processing, for example. Based on the interpreted content, the information processing apparatus 10 extracts, from the above database, one or more pieces of know-how information that can be an answer to the question, for example. To interpret the content of the question and extract the know-how information, a method using an LLM and Retrieval-Augmented Generation (RAG) is employed, but is not limited to this and any method may be adopted. The information processing apparatus 10 transmits the extracted know-how information to the terminal apparatus 20 or the other terminal apparatus different from the terminal apparatus 20 via the network 30. Here, the information processing apparatus 10 may modify the expression of the extracted know-how information, for example, by natural language processing. The terminal apparatus 20 or the other terminal apparatus different from the terminal apparatus 20 receives and acquires the know-how information from the information processing apparatus 10.

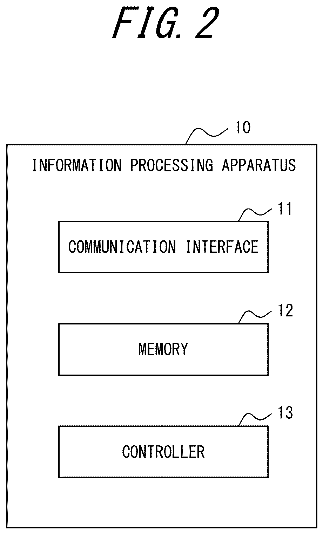

FIG. 2 is a block diagram illustrating an example configuration of the information processing apparatus 10 of FIG. 1. With reference to FIG. 2, the example configuration of the information processing apparatus 10 will be mainly described. The information processing apparatus 10 has a communication interface 11, a memory 12, and a controller 13.

The communication interface 11 includes at least one communication interface for connecting to the network 30. The communication interface is compliant with a mobile communication standard such as Long Term Evolution (LTE), 4th Generation (4G) standard, or 5th Generation (5G) standard, a wired local area network (LAN) standard, or a wireless LAN standard, but is not limited to these and may be compliant with any communication standard. For example, the communication interface may also be compliant with a short-range wireless communication standard. In the embodiment, the information processing apparatus 10 is communicably connected to the network 30 via the communication interface 11. The communication interface 11 transmits and receives various types of information via the network 30.

The memory 12 includes one or more memories. In the present disclosure, the "memories" include semiconductor memories, magnetic memories, or optical memories, for example, but are not limited to these. The memories included in the memory 12 may each function as, for example, a main memory, an auxiliary memory, or a cache memory. The memory 12 stores information necessary to realize operations of the information processing apparatus 10. For example, the memory 12 may store a system program, an application program, embedded software, or the like. For example, the memory 12 may store a dialogue system including an LLM or the like.

The memory 12 stores information obtained by operations of the information processing apparatus 10. For example, the memory 12 may store a database that stores know-how information. The database may store, linked to each employee, personnel information and work performance and proficiency, which are described later, in addition to the know-how information. The information stored in the memory 12 may be updated with, for example, information acquired from the network 30 via the communication interface 11.

The controller 13 includes at least one processor, at least one programmable circuit, at least one dedicated circuit, or a combination of these. In the present disclosure, the "processor" is a general purpose processor such as a central processing unit (CPU) or a graphics processing unit (GPU), or a dedicated processor specialized for specific processing, for example, but is not limited to these. The "programmable circuit" is, for example, a field-programmable gate array (FPGA), but is not limited to this. The "dedicated circuit" is, for example, an application specific integrated circuit (ASIC), but is not limited to this. The controller 13 is communicably connected to each component included in the information processing apparatus 10, and controls operations of the entire information processing apparatus 10.

The functions of the information processing apparatus 10 are realized by executing a program according to the present embodiment by a processor corresponding to the controller 13. That is, the functions of the information processing apparatus 10 are realized by software. The program causes a computer to execute operations of the information processing apparatus 10, thereby causing the computer to function as the information processing apparatus 10. That is, the computer executes the operations of the information processing apparatus 10 in accordance with the program to thereby function as the information processing apparatus 10.

In the present embodiment, the program can be recorded on a computer readable recording medium. The computer readable recording medium includes a non-transitory computer readable medium and is, for example, a magnetic recording apparatus, an optical disc, a magneto-optical recording medium, or a semiconductor memory. The program is distributed, for example, by selling, transferring, or lending a portable recording medium such as a Digital Versatile Disc (DVD) or a Compact Disc Read Only Memory (CD-ROM) on which the program is recorded. The program may be distributed by storing the program in a storage of an external server and transmitting the program from the external server to another computer. The program may be provided as a program product.

Some or all of the functions of the information processing apparatus 10 may be realized by a dedicated circuit corresponding to the controller 13. That is, some or all of the functions of the information processing apparatus 10 may be realized by hardware.

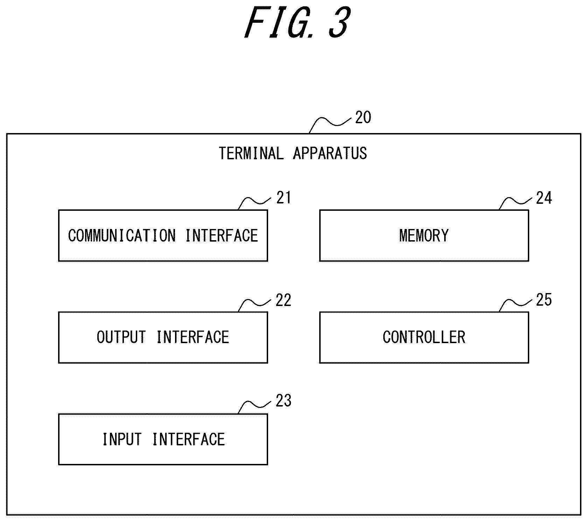

FIG. 3 is a block diagram illustrating an example configuration of the terminal apparatus 20 in FIG. 1. With reference to FIG. 3, the example configuration of the terminal apparatus 20 will be mainly described. The terminal apparatus 20 has a communication interface 21, an output interface 22, an input interface 23, a memory 24, and a controller 25.

The communication interface 21 includes at least one communication interface for connecting to the network 30. The communication interface is compliant with a mobile communication standards such as LTE, 4G standard, or 5G standard, a wired LAN standard, or a wireless LAN standard, but is not limited to these and may be compliant with any communication standard. For example, the communication interface may also be compliant with a short-range wireless communication standard. In the embodiment, the terminal apparatus 20 is communicably connected to the network 30 via the communication interface 21. The communication interface 21 transmits and receives various types of information via the network 30.

The output interface 22 includes at least one output interface for outputting information to a first user who uses the terminal apparatus 20. The output interface includes a display that visually outputs information as images, a speaker that audibly outputs information as audio, a vibrator that tactilely outputs information as vibration, or the like. In the present disclosure, the "display" includes, for example, a liquid crystal display (LCD), an organic electro luminescent (EL) display, or the like. The output interface 22 may be connected to the terminal apparatus 20 as an external output device, instead of being included in the terminal apparatus 20. As a connection method, any method such as Universal Serial Bus (USB), High-Definition Multimedia Interface (HDMI^{®}; HDMI is a registered trademark in Japan, other countries, or both), or Bluetooth^{®} (Bluetooth is a registered trademark in Japan, other countries, or both) can be used.

The input interface 23 includes at least one input interface for detecting user input to acquire input information based on an operation by the first user. The input interface includes physical keys, capacitive keys, a pointing device such as a mouse, a touch screen integrally provided with a display of the output interface 22, an imaging module such as a camera, a microphone that accepts audio input, or the like. The input interface 23 may include any other input interfaces, not limited to these. The input interface 23 may be connected to the terminal apparatus 20 as an external input device, instead of being included in the terminal apparatus 20. As a connection method, any method such as USB, HDMI^{®}, or Bluetooth^{®} can be used.

The memory 24 includes one or more memories. The memories included in the memory 24 may each function as, for example, a main memory, an auxiliary memory, or a cache memory. The memory 24 stores information necessary to realize operations of the terminal apparatus 20. For example, the memory 24 may store a system program, an application program, embedded software, or the like. The memory 24 stores information obtained by operations of the terminal apparatus 20. The information stored in the memory 24 may be updated with, for example, information acquired from the network 30 via the communication interface 21.

The controller 25 includes at least one processor, at least one programmable circuit, at least one dedicated circuit, or a combination of these. The controller 25 is communicably connected to each component of the terminal apparatus 20, and controls operations of the entire terminal apparatus 20.

The functions of the terminal apparatus 20 are realized by execution of a program according to the present embodiment by a processor corresponding to the controller 25. That is, the functions of the terminal apparatus 20 are realized by software. The program causes a computer to execute operations of the terminal apparatus 20, thereby causing the computer to function as the terminal apparatus 20. That is, the computer executes the operations of the terminal apparatus 20 in accordance with the program to thereby function as the terminal apparatus 20.

Some or all of the functions of the terminal apparatus 20 may be implemented by a dedicated circuit corresponding to the controller 25. That is, some or all of the functions of the terminal apparatus 20 may be realized by hardware.

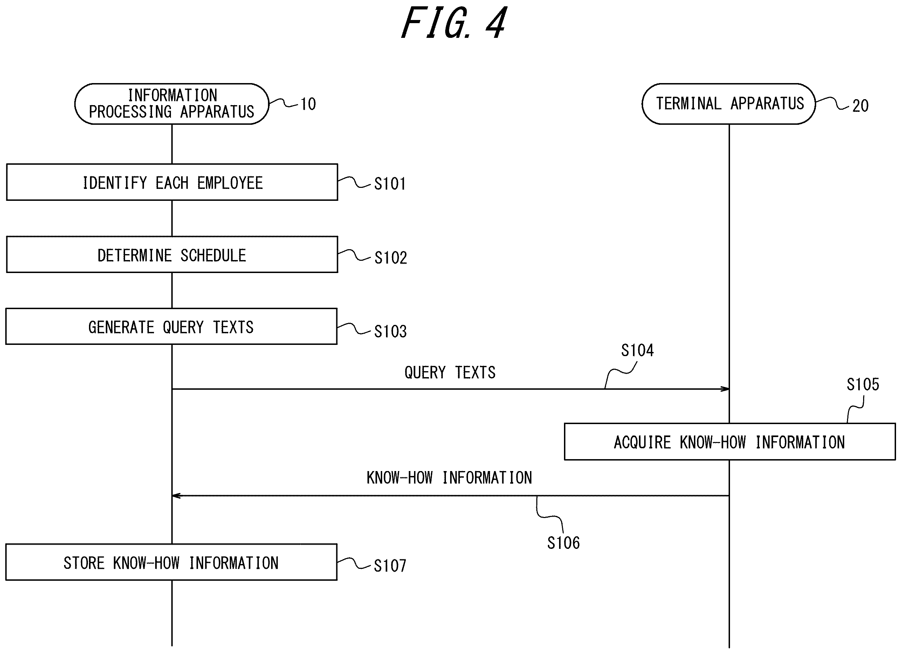

FIG. 4 is a sequence diagram illustrating an example of an information processing method performed by the information processing system 1 of FIG. 1. With reference to FIG. 4, operations of the information processing apparatus 10 according to the embodiment will be mainly described, providing an overview of operations of the entire information processing system 1. The sequence diagram of FIG. 4 illustrates a flow of fundamental processing executed by the information processing apparatus 10.

In step S101, the controller 13 of the information processing apparatus 10 identifies, based on personnel information on a plurality of employees, each employee who has a first event scheduled, which is an event that changes an area of work responsibility. For example, the controller 13 reads personnel information stored in the memory 12 of the information processing apparatus 10, and identifies, with reference to the read personnel information, each employee who has a first event scheduled, which is an event that changes an area of work responsibility.

In step S102, the controller 13 of the information processing apparatus 10 determines, for each employee identified in step S101, a schedule of each employee to perform a second event, which is an event that collects know-how information from the employee, prior to a scheduled date of the first event.

In step S103, the controller 13 of the information processing apparatus 10 automatically generates, based on the work performance of the employee, query texts for the employee to collect the know-how information in the second event whose schedule has been determined in step S102. In the present disclosure, the "work performance" includes, for example, the results of work, years of experience, the content of work, or the like that the employee has performed in the past.

For example, the controller 13 determines the composition of the query texts according to the proficiency of the employee corresponding to the work performance. In the present disclosure, the "proficiency" includes, for example, an objective indicator that indicates the degree of proficiency of the employee in the work and that is determined according to the work performance of the employee. For example, the proficiency may be represented based on any indicator. For example, the proficiency may be represented by one of three levels: "high", "medium", and "low". Not limited to this, the proficiency may be represented by a numerical value within any numerical range. For example, the proficiency may be represented by a numerical value from 0 to 100. As an example, the higher the numerical value, the higher the indicated degree of proficiency.

For example, the controller 13 reads the work performance stored in the memory 12 of the information processing apparatus 10, and calculates the proficiency of each employee in advance with reference to the read work performance. The controller 13 stores, linked to each employee, the calculated proficiency of the employee in a database of the memory 12.

For example, the controller 13 reads the proficiency stored in the memory 12 of the information processing apparatus 10, and determines, with reference to the read proficiency, the composition of the query texts to collect the know-how information from the corresponding employee in the second event. In the present disclosure, the "composition of the query texts" includes, for example, the number, content, textual expressions, or the like of the query texts.

For example, for proficient employees with high proficiency, the controller 13 may increase the number of the query texts, make the content of the query texts more specific to extract the know-how information in more detail, or make the textual expressions of the query texts more specialized. The proficient employees refer to, for example, employees who are linked to data indicating "high" proficiency. For example, for non-proficient employees with low proficiency, the controller 13 may decrease the number of the query texts, make the content of the query texts more abstract to extract the know-how information in a more general manner, or make the textual expressions of the query texts more common. The inexperienced employees refer to, for example, employees who are linked to data indicating "low" proficiency.

As described above, the controller 13 reads the work performance and proficiency stored in the memory 12 of the information processing apparatus 10, and automatically generates, based on the read work performance and proficiency, the query texts for the employee to collect the know-how information in the second event. The controller 13 may generate the query texts as at least one of text information, image information, or audio information.

In step S104, the controller 13 of the information processing apparatus 10 provides the terminal apparatus 20 with the query texts generated in step S103 as information. For example, the controller 13 transmits the information to the terminal apparatus 20 via the communication interface 11 and the network 30. The controller 25 of the terminal apparatus 20 receives the information from the information processing apparatus 10 via the network 30 and the communication interface 21. The controller 25 thereby acquires, from the information processing apparatus 10, the query texts generated by the information processing apparatus 10 in step S103 as information.

In step S105, the controller 25 of the terminal apparatus 20 outputs the query texts acquired in step S104 to a first user of the terminal apparatus 20 using the output interface 22. For example, the controller 25 may display the query texts acquired in step S104 as text information or image information on a display of the output interface 22. For example, the controller 25 may output the query texts acquired in step S104 as audio information from a speaker of the output interface 22. The first user of the terminal apparatus 20 executes the second event using the query texts output from the output interface 22, to collect the know-how information from the employee. The controller 25 of the terminal apparatus 20 acquires the know-how information by having the first user, who has collected the know-how information in the second event, input the know-how information using the input interface 23.

In step S106, the controller 25 of the terminal apparatus 20 provides the information processing apparatus 10 with the know-how information acquired in step S105. For example, the controller 25 transmits the know-how information to the information processing apparatus 10 via the communication interface 21 and the network 30. The controller 13 of the information processing apparatus 10 receives the know-how information from the terminal apparatus 20 via the network 30 and the communication interface 11. The controller 13 thereby acquires, from the terminal apparatus 20, the know-how information acquired by the terminal apparatus 20 in step S105. At this time, the controller 13 may also acquire, from the terminal apparatus 20, employee identification data, which has been acquired together with the know-how information in step S105, in addition to the know-how information.

In step S107, the controller 13 of the information processing apparatus 10 stores, linked to each employee, the know-how information, which has been acquired in step S106 and has been collected through the second event, in the database. For example, the controller 13 may store the know-how information in the database as text data described in a natural language. The text data may be text data directly input by the first user of the terminal apparatus 20 via the input interface 23, or may be text data that has been transcribed from audio data input audibly by the first user. Not limited to the above, the know-how information may be data in a predetermined format described according to a specified format. For example, the know-how information may be data in an image format or data in an audio format.

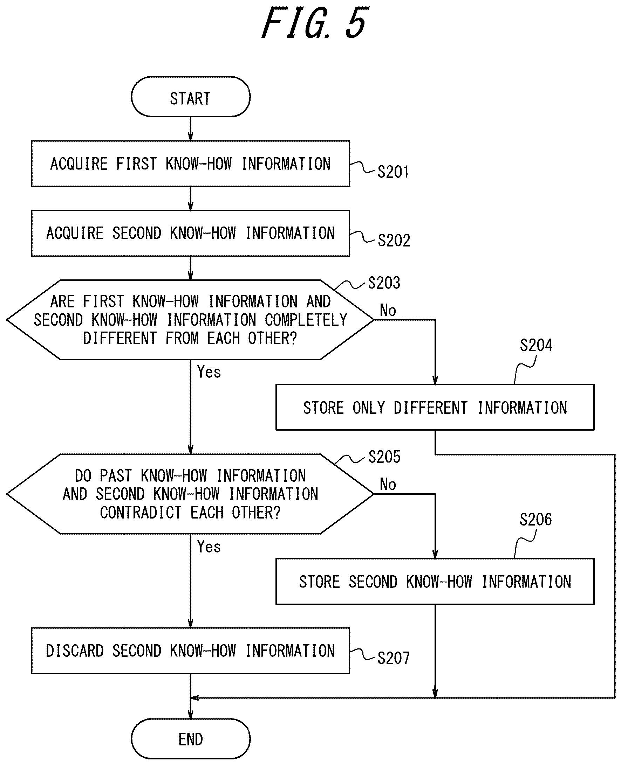

FIG. 5 is a flowchart illustrating an example of an information processing method performed by the information processing apparatus 10 of FIG. 1. With reference to FIG. 5, the content of processing executed by the controller 13 of the information processing apparatus 10 according to the embodiment in steps S106 and S107 of FIG. 4 will be mainly explained, and more specific operations of the information processing apparatus 10 will be described in detail.

In step S201, the controller 13 of the information processing apparatus 10 acquires, from the terminal apparatus 20, first know-how information collected from proficient employees. For example, the controller 13 receives first know-how information from the terminal apparatus 20 via the network 30 and the communication interface 11.

In step S202, the controller 13 of the information processing apparatus 10 acquires, from the terminal apparatus 20, second know-how information collected from non-proficient employees. For example, the controller 13 receives second know-how information from the terminal apparatus 20 via the network 30 and the communication interface 11.

In step S203, the controller 13 of the information processing apparatus 10 compares the first know-how information collected from the proficient employees with the second know-how information collected from the non-proficient employees. For example, the controller 13 may compare the first know-how information and the second know-how information collected as replies to the same query texts in the second event. For example, the controller 13 determines whether the first know-how information acquired in step S201 and the second know-how information acquired in step S202 are completely different from each other. Upon determining that the first know-how information and the second know-how information are completely different from each other, the controller 13 performs the processing of step S205. Upon determining that the first know-how information and the second know-how information are at least partially common to each other, the controller 13 performs the processing of step S204.

When it is determined in step S203 that the first know-how information and the second know-how information are at least partially common to each other, the controller 13 of the information processing apparatus 10 stores, in step S204, only information that is different from the second know-how information among the first know-how information. In general, the amount of the first know-how information collected from the proficient employees in the second event tend to be greater than that of the second know-how information collected from the non-proficient employees. Therefore, the processing in step S204 corresponds to processing in which at least a part of a small second frame indicating the amount of the second know-how information is contained in a large first frame indicating the amount of the first know-how information. The controller 13 stores, in a database of the memory 12, only the first know-how information in a part of the first frame that does not overlap with the second frame.

When it is determined in step S203 that the first know-how information and the second know-how information are completely different from each other, in step S205, the controller 13 of the information processing apparatus 10 determines whether past know-how information stored in the past in the database of the memory 12 and the second know-how information acquired in step S202 contradict each other. Upon determining that the past know-how information and the second know-how information contradict each other, the controller 13 performs the processing of step S207. Upon determining that the past know-how information and the second know-how information do not contradict each other, the controller 13 performs the processing of step S206.

For example, the controller 13 automatically generates, for a dialogue system such as an LLM of the information processing apparatus 10, a query text asking whether know-how information that contradicts the second know-how information is stored in the database of the memory 12, and provides the query text to the dialogue system to perform query processing. Upon receiving a reply indicating no contradiction from the dialogue system, the controller 13 determines that the past know-how information and the second know-how information do not contradict each other. Upon receiving a reply indicating contradiction from the dialogue system, the controller 13 determines that the past know-how information and the second know-how information contradict each other.

Upon determining in step S205 that the past know-how information and the second know-how information do not contradict each other, in step S206, the controller 13 of the information processing apparatus 10 stores the second know-how information acquired in step S202 in the database of the memory 12. That is, the controller 13 stores the second know-how information in the database only when the second know-how information collected from the non-proficient employees is completely different from the first know-how information collected from the proficient employees, and when the past know-how information stored in the database and the second know-how information do not contradict each other.

In general, the amount of the first know-how information collected from the proficient employees in the second event tend to be greater than that of the second know-how information collected from the non-proficient employees. Therefore, the processing in step S206 corresponds to processing in which a small second frame indicating the amount of the second know-how information is not contained in a large first frame indicating the amount of the first know-how information, and the entire second frame is located outside the first frame. The controller 13 stores the second know-how information in the database of the memory 12 only when the second know-how information in the second frame that does not overlap with the first frame does not contradict the past know-how information.

Upon determining in step S205 that the past know-how information and the second know-how information contradict each other, in step S207, the controller 13 of the information processing apparatus 10 discards the second know-how information acquired in step S202, without storing the second know-how information in the database of the memory 12.

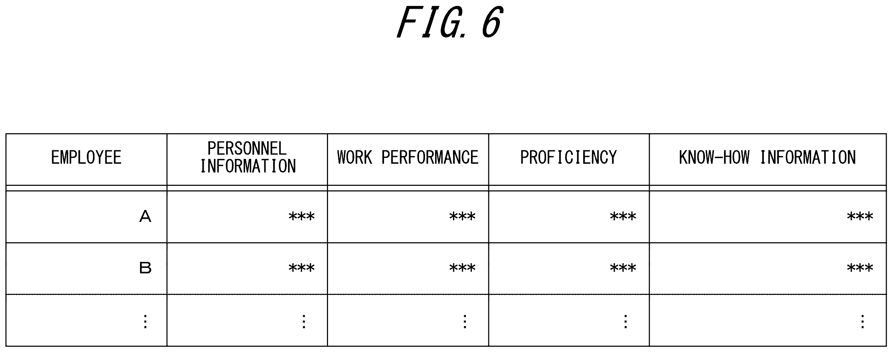

FIG. 6 is a schematic diagram for explaining an example of operations of the information processing apparatus 10 of FIG. 1. With reference to FIG. 6, an example configuration of a database stored in the memory 12 of the information processing apparatus 10 of FIG. 1 will be mainly described. In FIG. 6, only two employees, "A" and "B", are explicitly illustrated for the purpose of simplifying the illustration, but the number of employees whose data is included in the database is not limited to two.

The database stored in the memory 12 includes identification data on employees including the employees A and B. In the present disclosure, the "identification data" may include text data such as the employee number or name of each employee, image data such as a facial image of each employee, or biometric data in the form of a pattern such as a fingerprint, vein, iris, or voiceprint of each employee.

In the database, personnel information is linked to the identification data on each employee. In the database, work performance is linked to the identification data on each employee, as well as the personnel information. In the database, the proficiency of each employee is linked to the identification data on the employee, as well as the personnel information and the work performance. In the database, know-how information collected in a second event is linked to the identification data on each employee, as well as the personnel information, the work performance, and the proficiency.

According to the embodiment as described above, technology for realizing dialogue systems is improved. In realizing a dialogue system that outputs answers to questions, the information processing apparatus 10 can conduct hearings for know-how information on a predetermined number of days before a scheduled transfer date, for example, with reference to personnel information on each employee. The information processing apparatus 10 stores, linked to each employee, the know-how information collected through the second event before the scheduled date of the first event, in a database. This enables the information processing apparatus 10 to collect the know-how information from employees whose areas of work responsibility are scheduled to change due to transfers or the like, before the transfer dates. Therefore, the information processing apparatus 10 can collect the highly accurate know-how information with high efficiency. A second user can pose questions related to the know-how information to the dialogue system based on the database in which the know-how information is accumulated, and obtain highly accurate answers.

The information processing apparatus 10 automatically generates, based on the work performance of the employee, query texts for the employee to collect the know-how information in the second event. This enables a first user to accurately and easily extract the know-how information from the employees in the second event, based on the query texts automatically generated by the information processing apparatus 10. Therefore, the information processing apparatus 10 can collect the highly accurate know-how information with high efficiency. A second user can pose questions related to the know-how information to the dialogue system based on the database in which the know-how information is accumulated, and obtain highly accurate answers.

The information processing apparatus 10 determines the composition of the query texts according to the proficiency of the employee corresponding to the work performance. This enables a first user to accurately and easily extract the know-how information from the employees in the second event, based on the query texts that are automatically generated based on the composition determined by the information processing apparatus 10. The first user can appropriately conduct an interview for each employee with query content according to the proficiency of the employee. Therefore, the information processing apparatus 10 can collect the highly accurate know-how information with high efficiency. A second user can pose questions related to the know-how information to the dialogue system based on the database in which the know-how information is accumulated, and obtain highly accurate answers.

The information processing apparatus 10 compares first know-how information collected from proficient employees with second know-how information collected from non-proficient employees, and stores only information that is different from the second know-how information among the first know-how information. This enables the information processing apparatus 10 to discard information common to the second know-how information collected from the non-proficient employees, as relatively less important information, and to hold only important information collected only from the proficient employees, as the first know-how information. The information processing apparatus 10 can screen the know-how information, and store only the important information in the database of the memory 12. Therefore, the information processing apparatus 10 can collect the highly accurate know-how information with high efficiency. A second user can pose questions related to the know-how information to the dialogue system based on the database in which the know-how information is accumulated, and obtain highly accurate answers.

The information processing apparatus 10 stores the second know-how information collected from the non-proficient employees when the second know-how information is completely different from the first know-how information collected from the proficient employees, and when stored past know-how information and the second know-how information do not contradict each other. This enables the information processing apparatus 10 to verify the reliability of the know-how information that has not been obtained from the proficient employees but has been collected only from the non-proficient employees. The information processing apparatus 10 can store only the highly reliable second know-how information in the database of the memory 12, though the second know-how information is collected only from the non-proficient employees. Therefore, the information processing apparatus 10 can collect the highly accurate know-how information with high efficiency. A second user can pose questions related to the know-how information to the dialogue system based on the database in which the know-how information is accumulated, and obtain highly accurate answers.

While the present disclosure has been described based on the drawings and examples, it should be noted that various changes and modifications can be made by those skilled in the art based on the present disclosure. Accordingly, such modifications and revisions are included within the scope of the present disclosure. For example, functions or the like included in each configuration, each step, or the like can be rearranged without logical inconsistency, and a plurality of configurations, steps, or the like can be combined into one or divided.

For example, a configuration that causes a general purpose electronic device such as a smartphone or a computer to function as the information processing apparatus 10 according to the above embodiment is possible. Specifically, a program in which processes for realizing the functions of the information processing apparatus 10 or the like according to the embodiment are written may be stored in a memory of the electronic device, and the program may be read and executed by a processor of the electronic device. Accordingly, the present disclosure can also be implemented as a program executable by a processor.

Alternatively, the present disclosure can also be implemented as a non-transitory computer readable medium storing a program executable by a single processor or a plurality of processors to cause the information processing apparatus 10 or the like according to the embodiment to execute the functions. It is to be understood that these are also included within the scope of the present disclosure.

For example, at least some of the processing operations performed in the information processing apparatus 10 in the above embodiment may be performed in the terminal apparatus 20. For example, instead of the controller 13 of the information processing apparatus 10, the controller 25 of the terminal apparatus 20 may execute the sequence of processing operations described above with regard to the information processing apparatus 10. For example, the information processing apparatus 10 may be integrally included in the terminal apparatus 20 as a part of the terminal apparatus 20. At least some of the processing operations performed in the terminal apparatus 20 may be performed in the information processing apparatus 10.

In the above embodiment, the information processing apparatus 10 has been described as automatically generating query texts for each employee based on the work performance of the employee, to collect know-how information in a second event, but is not limited to this. The information processing apparatus 10 may not execute such processing to automatically generate query texts. Alternatively, the information processing apparatus 10 may automatically generate query texts for each employee, regardless of the work performance of the employee, to collect know-how information in a second event. For example, the information processing apparatus 10 may automatically generate query texts for each employee, as templates, to collect know-how information in a second event.

In the above embodiment, the information processing apparatus 10 has been described as determining the composition of query texts according to the proficiency of each employee corresponding to work performance, but is not limited to this. The information processing apparatus 10 may not execute such processing to determine the composition of query texts. Alternatively, the information processing apparatus 10 may determine the composition of query texts, regardless of the proficiency of each employee corresponding to work performance. For example, the information processing apparatus 10 may determine the composition of query texts in a standardized manner.

In the above embodiment, the information processing apparatus 10 has been described as comparing first know-how information collected from proficient employees with second know-how information collected from non-proficient employees, and storing only information that is different from the second know-how information among the first know-how information, but is not limited to this. The information processing apparatus 10 may not execute such processing to compare between first know-how information and second know-how information. At this time, the information processing apparatus 10 may store the entire first know-how information, including information common to the second know-how information, in a database of the memory 12.

In the above embodiment, the information processing apparatus 10 has been described as storing second know-how information collected from non-proficient employees when the second know-how information is completely different from first know-how information collected from proficient employees and when stored past know-how information and the second know-how information do not contradict each other, but is not limited to this. The information processing apparatus 10 may not execute such processing to compare between past know-how information and second know-how information even when the second know-how information is completely different from first know-how information. At this time, the information processing apparatus 10 may store the second know-how information unconditionally in a database of the memory 12.

In the above embodiment, a database of the memory 12 has been described as storing, linked to each employee, not only know-how information but also personnel information, work performance, and proficiency, but is not limited to this. The database only needs to store at least the know-how information linked to each employee, and may not store at least one of the personnel information, work performance, or proficiency.

In the above embodiment, the information processing apparatus 10 has been described as comprehensively providing the function of building and storing a database including know-how information and the function of executing a dialogue system such as an LLM, but is not limited to this. The information processing apparatus 10 may be realized as a server apparatus having the function of building and storing a database including know-how information. At this time, a server apparatus having the function of executing a dialogue system such as an LLM may be configured separately from the information processing apparatus 10. At this time, the information processing apparatus 10 may be communicably connected to that server apparatus via the communication interface 11 and the network 30.

Accordingly, the memory 12 of the information processing apparatus 10 is not limited to a configuration that stores a database including know-how information and a dialogue system such as an LLM. The memory 12 may store a database including know-how information. At this time, a dialogue system such as an LLM may be stored in the above server apparatus configured separately from the information processing apparatus 10.

Examples of some embodiments of the present disclosure are described below. However, it should be noted that the embodiments of the present disclosure are not limited to these examples.
[Appendix 1] A method performed by an information processing apparatus, the method comprising:
   identifying, based on personnel information on a plurality of employees, each employee who has a first event scheduled, the first event being an event that changes an area of work responsibility;
   for each employee identified, determining a schedule of each employee to perform a second event prior to a scheduled date of the first event, the second event being an event that collects know-how information from the employee; and
   storing, linked to each employee, the know-how information collected through the second event, in a database.
[Appendix 2] The method according to appendix 1, further comprising automatically generating, based on work performance of the employee, a query text for the employee to collect the know-how information in the second event.
[Appendix 3] The method according to appendix 2, wherein the automatically generating of the query text includes determining a composition of the query text according to proficiency of the employee corresponding to the work performance.
[Appendix 4] The method according to any one of appendices 1 to 3, wherein the storing of the know-how information includes comparing first know-how information collected from a proficient employee with second know-how information collected from a non-proficient employee, and storing only information that is different from the second know-how information among the first know-how information.
[Appendix 5] The method according to any one of appendices 1 to 4, wherein the storing of the know-how information includes storing second know-how information collected from a non-proficient employee when the second know-how information is completely different from first know-how information collected from a proficient employee, and when stored past know-how information and the second know-how information do not contradict each other.
[Appendix 6] The method according to any one of appendices 1 to 5, wherein the know-how information includes information that is not contained in a manual and information uniquely acquired by the employee while the employee performs duty.
[Appendix 7] An information processing apparatus comprising a controller configured to:
   identify, based on personnel information on a plurality of employees, each employee who has a first event scheduled, the first event being an event that changes an area of work responsibility;
   for each employee identified, determine a schedule of each employee to perform a second event prior to a scheduled date of the first event, the second event being an event that collects know-how information from the employee; and
   store, linked to each employee, the know-how information collected through the second event, in a database.
[Appendix 8] The information processing apparatus according to appendix 7, wherein the controller is configured to automatically generate, based on work performance of the employee, a query text for the employee to collect the know-how information in the second event.
[Appendix 9] The information processing apparatus according to appendix 8, wherein the controller is configured to determine a composition of the query text according to proficiency of the employee corresponding to the work performance.
[Appendix 10] The information processing apparatus according to any one of appendices 7 to 9, wherein the controller is configured to compare first know-how information collected from a proficient employee with second know-how information collected from a non-proficient employee, and store only information that is different from the second know-how information among the first know-how information.
[Appendix 11] The information processing apparatus according to any one of appendices 7 to 10, wherein the controller is configured to store second know-how information collected from a non-proficient employee when the second know-how information is completely different from first know-how information collected from a proficient employee, and when stored past know-how information and the second know-how information do not contradict each other.
[Appendix 12] The information processing apparatus according to any one of appendices 7 to 11, wherein the know-how information includes information that is not contained in a manual and information uniquely acquired by the employee while the employee performs duty.
[Appendix 13] A program configured to cause a computer to execute operations, the operations comprising:
   identifying, based on personnel information on a plurality of employees, each employee who has a first event scheduled, the first event being an event that changes an area of work responsibility;
   for each employee identified, determining a schedule of each employee to perform a second event prior to a scheduled date of the first event, the second event being an event that collects know-how information from the employee; and
   storing, linked to each employee, the know-how information collected through the second event, in a database.
[Appendix 14] The program according to appendix 13, wherein the operations further comprise automatically generating, based on work performance of the employee, a query text for the employee to collect the know-how information in the second event.
[Appendix 15] The program according to appendix 14, wherein the automatically generating of the query text includes determining a composition of the query text according to proficiency of the employee corresponding to the work performance.
[Appendix 16] The program according to any one of appendices 13 to 15, wherein the storing of the know-how information includes comparing first know-how information collected from a proficient employee with second know-how information collected from a non-proficient employee, and storing only information that is different from the second know-how information among the first know-how information.
[Appendix 17] The program according to any one of appendices 13 to 16, wherein the storing of the know-how information includes storing second know-how information collected from a non-proficient employee when the second know-how information is completely different from first know-how information collected from a proficient employee, and when stored past know-how information and the second know-how information do not contradict each other.
[Appendix 18] The program according to any one of appendices 13 to 17, wherein the know-how information includes information that is not contained in a manual and information uniquely acquired by the employee while the employee performs duty.

## Claims

1. A method performed by an information processing apparatus (10), the method comprising:
identifying, based on personnel information on a plurality of employees, each employee who has a first event scheduled, the first event being an event that changes an area of work responsibility;
for each employee identified, determining a schedule of each employee to perform a second event prior to a scheduled date of the first event, the second event being an event that collects know-how information from the employee; and
storing, linked to each employee, the know-how information collected through the second event, in a database.

2. The method according to claim 1, further comprising automatically generating, based on work performance of the employee, a query text for the employee to collect the know-how information in the second event.

3. The method according to claim 2, wherein the automatically generating of the query text includes determining a composition of the query text according to proficiency of the employee corresponding to the work performance.

4. The method according to any one of claims 1 to 3, wherein the storing of the know-how information includes comparing first know-how information collected from a proficient employee with second know-how information collected from a non-proficient employee, and storing only information that is different from the second know-how information among the first know-how information.

5. The method according to any one of claims 1 to 3, wherein the storing of the know-how information includes storing second know-how information collected from a non-proficient employee when the second know-how information is completely different from first know-how information collected from a proficient employee, and when stored past know-how information and the second know-how information do not contradict each other.

6. An information processing apparatus (10) comprising a controller (13) configured to:
identify, based on personnel information on a plurality of employees, each employee who has a first event scheduled, the first event being an event that changes an area of work responsibility;
for each employee identified, determine a schedule of each employee to perform a second event prior to a scheduled date of the first event, the second event being an event that collects know-how information from the employee; and
store, linked to each employee, the know-how information collected through the second event, in a database.

7. The information processing apparatus (10) according to claim 6, wherein the controller (13) is configured to automatically generate, based on work performance of the employee, a query text for the employee to collect the know-how information in the second event.

8. The information processing apparatus (10) according to claim 7, wherein the controller (13) is configured to determine a composition of the query text according to proficiency of the employee corresponding to the work performance.

9. The information processing apparatus (10) according to any one of claims 6 to 8, wherein the controller (13) is configured to compare first know-how information collected from a proficient employee with second know-how information collected from a non-proficient employee, and store only information that is different from the second know-how information among the first know-how information.

10. The information processing apparatus (10) according to any one of claims 6 to 8, wherein the controller (13) is configured to store second know-how information collected from a non-proficient employee when the second know-how information is completely different from first know-how information collected from a proficient employee, and when stored past know-how information and the second know-how information do not contradict each other.

11. A non-transitory computer readable medium storing a program configured to cause a computer to execute operations, the operations comprising:
identifying, based on personnel information on a plurality of employees, each employee who has a first event scheduled, the first event being an event that changes an area of work responsibility;
for each employee identified, determining a schedule of each employee to perform a second event prior to a scheduled date of the first event, the second event being an event that collects know-how information from the employee; and
storing, linked to each employee, the know-how information collected through the second event, in a database.

12. The non-transitory computer readable medium according to claim 11, wherein the operations further comprise automatically generating, based on work performance of the employee, a query text for the employee to collect the know-how information in the second event.

13. The non-transitory computer readable medium according to claim 12, wherein the automatically generating of the query text includes determining a composition of the query text according to proficiency of the employee corresponding to the work performance.

14. The non-transitory computer readable medium according to any one of claims 11 to 13, wherein the storing of the know-how information includes comparing first know-how information collected from a proficient employee with second know-how information collected from a non-proficient employee, and storing only information that is different from the second know-how information among the first know-how information.

15. The non-transitory computer readable medium according to any one of claims 11 to 13, wherein the storing of the know-how information includes storing second know-how information collected from a non-proficient employee when the second know-how information is completely different from first know-how information collected from a proficient employee, and when stored past know-how information and the second know-how information do not contradict each other.
